# NEUE EUROPÄISCHE PATENTSCHRIFT

(11) **EP 1 593 172 B2**
(45) Veröffentlichungstag und Bekanntmachung des Hinweises auf die Entscheidung über den Einspruch: **08.08.2018**
(45) Hinweis auf die Patenterteilung: 18.07.2007
(21) Anmeldenummer: 03815370.6
(22) Anmeldetag: 19.12.2003
(51) Int. Cl.: H01M 8/02, H01M 8/10

(54) **VERFAHREN ZUR HERSTELLUNG EINER MEMBRAN-ELEKTRODEN-EINHEIT UND ZUR HERSTELLUNG EINER POLYMERELEKTROLYT-BRENNSTOFFZELLE**
METHODS FOR PRODUCTION OF A MEMBRANE-ELECTRODE UNIT AND A POLYMER ELECTROLYTE FUEL CELL
PROCÉDÉ DE PRODUCTION D'UNE UNITÉ MEMBRANE-ÉLECTRODES ET D'UNE PILE À COMBUSTIBLE

(30) Priorität: 20.01.2003 DE 10301810
(43) Veröffentlichungstag der Anmeldung: 09.11.2005
(60) Teilanmeldung: 06012104.3
(73) Patentinhaber: elcomax membranes GmbH, 81737 München (DE)
(72) Erfinder: MELZNER, Dieter, 37075 Göttingen (DE); REICHE, Annette, 37079 Göttingen (DE); MÄHR, Ulrich, 14052 Berlin (DE); KIEL, Suzana, 37073 Göttingen (DE)
(74) Vertreter: Grättinger, Günter
(86) Internationale Anmeldenummer: PCT/EP2003/014623
(87) Internationale Veröffentlichungsnummer: WO 2004/066428

(56) Entgegenhaltungen:
- EP-A- 0 827 228
- EP-A- 1 205 994
- EP-A1- 0 967 674
- WO-A-00/44816
- WO-A-00/56431
- WO-A-01/18894
- WO-A-01/64322
- WO-A1-97/23919
- US-A- 5 322 916
- Thesis "High Temperature Proton Conducting Polymer Fuel Cells" von Jiangtao Wang, Arbeitsgruppe Prof. Dr. Savinelli, May 1996
- 31P-NMR Spektrum von Phosphorsäure-Diethylester bei verschiedenen Temperaturen
- QINGFENG L. ET AL: 'Phosphoric acid doped polybenzimidazole membranes: Physiochemical characterization and fuel cell applications' JOURNAL OF APPLIED ELECTROCHEMISTRY Bd. 31, 2001, Seiten 773 - 779
- WANG J.-T. ET AL: 'A H2/O2 fuel cell using acid doped polybenzimidazole as polymer electrolyte' ELECTROCHIMICA ACTA Bd. 41, Nr. 2, 1996, Seiten 193 - 197

## Beschreibung

Die vorliegende Erfindung betrifft ein Verfahren zur Herstellung einer Membran-Elektroden-Einheit (MEE) und einer Polymerelektrolyt-Brennstoffzelle im Arbeitstemperaturbereich bis 250 °C.

Zur stationären und mobilen Stromgewinnung, z.B. für Straßenfahrzeuge, in der Raumfahrt, in Kraftwerken etc. werden in zunehmendem Maße Brennstoffzellen als mögliche Stromquelle untersucht und entwickelt. Eine Brennstoffzelle ist ein galvanisches Element, in dem chemische Energie direkt, d.h. nicht auf dem Umweg über thermische Energie, in elektrische Energie umgewandelt wird. Die Einzelzelle besteht dabei aus zwei invarianten Elektroden, zwischen denen sich ein invarianter Elektrolyt befindet. Die Brennstoffzelle liefert kontinuierlich Strom, wobei die zu oxidierende Substanz, d.h. der sogenannte Brennstoff, wie Wasserstoff, der durch Spaltung von Erdgas, Methanol, Hydrazin, Ammoniak etc. gewonnen wird, und das Oxidationsmittel, z.B. Sauerstoff, kontinuierlich zu- und die Oxidationsprodukte, z.B. Wasser, kontinuierlich abgeführt werden.

Mit Beginn des Einsatzes von polymeren Membranen als invarianter Feststoffelektrolyt richtete sich die Aufmerksamkeit auf protonenleitende Polymermembranen auf Basis perfluorierter Sulfonsänreeinheiten enthaltender Ionomere, wie z.B. Perfluoroalkyl-Sulfonsäure-Polymerelektrolyte. Eine derartige Polymermembran ist beispielsweise unter der Marke Nafion® von Du Pont erhältlich. Solche Polymermembranen sind heterogene Systeme. Die hydrophilen und hydrophoben Polymerbausteine bilden eine Clusterstruktur, in die, als Voraussetzung für eine hohe Leitfähigkeit, Wasser eingelagert wird. Der Ladungstransport ist bei diesem heterogenen System an die flüssige, d.h. wässrige Phase gebunden. Die Tatsache, daß Wassermoleküle in diesen Protonenleitem als Protonencarrier fungieren, bedingt, daß die Wasserkonzentration in der Zelle konstant gehalten werden muß. Letzteres ist problematisch, da Wasser stets als Oxidationsprodukt bei der Reaktion erzeugt wird und daher kontrolliert abgeführt werden muß. Ebenfalls bedingt durch die Rolle der Wassermoleküle als Protonencarrier arbeiten die Brennstoffzellen bei Temperaturen unterhalb von 100°C, da bei Temperaturen von oberhalb von 100°C Wasser aus den Polymermembranen ausgetrieben wird. Dies würde zu einer Verminderung der Leitfähigkeit führen, weshalb die Polymermembranen auf einen Einsatz im Temperaturbereich unterhalb 100°C beschränkt sind (O. Savadogo et al., Journal of New Materials for Electrochemical Systems 1 (1998), S. 47-66). Ein weiteres Problem von Polymermembran-Brennstoffzellen auf Nafionbasis besteht darin, daß die verwendeten Katalysatoren im Temperaturbereich unterhalb 100°C besonders empfindlich auf Katalysatorgifte wie Kohlenmonoxid reagieren und generell wenig effektiv arbeiten.

In US-Patent Nr. 5 525 436 wird eine polymere Feststoffelektrolytmembran beschrieben, die ein protonenleitendes Polymer umfaßt, welches bis zu Temperaturen von 400°C thermisch stabil ist. Das protonenleitende Polymer kann dabei ein basisches Polymer sein, vorzugsweise Polybenzimidazol (PBI), welches mit einer starken Säure, vorzugsweise Schwefelsäure oder Phosphorsäure dotiert ist. Ein basisches Polymer, wie PBI führt bei Dotierung mit einer starken Säure, wie Schwefelsäure oder Phosphorsäure, zu einem Polymerelektrolyten, der ein Einphasensystem bildet, in welchem die Säure durch das Polymer komplexiert wird. Im Gegensatz zu den vorher beschriebenen heterogenen wasserhaltigen Systemen setzt der Ladungstransport nicht das Vorhandensein einer wässrigen Phase voraus.

Bei dem beispielsweise in US-Patent Nr.5 525 436 beschriebenen einphasigen Elektrolytsystem werden (ebenfalls im Gegensatz zu den heterogenen Systemen) technisch relevante Leitfähigkeiten erst bei Temperaturen oberhalb von 100°C erreicht. Die Leitfähigkeit der Polymermembran ist abhängig von der darin enthaltenen Konzentration an Phosphorsäure, aber nicht nennenswert vom Wassergehalt. Polymermembranen auf der Basis von PBI sind gasdicht. Aus diesem Grund und bedingt durch die Komplexierung der Säure durch das Polymer ist der Säureaustrag aus der Zelle vernachlässigbar. Die Verwendung entsprechender Polymermembranen sollte einen Betrieb der Brennstoffzelle im Arbeitstemperaturbereich > 100°C < 200°C ermöglichen, mit Vorteilen im Bereich Katalysatoreffizienz und geringere Kalalysatorempfindlichkeit und das Wassermanagement grundlegend vereinfachen. Aus diesen Gründen und wegen der hohen Oxidationsbeständigkeit des Polymeren werden mit Phosphorsäure dotierte PBI-Polymermembranen als Elektrolyt und Separator für Brennstoffzeilen Im Arbeitstemperaturbereich oberhalb von 100°C, beispielsweise für etwa 160°C entwickelt.

Die Phosphorsäure-dotierten PBI-Polymermembranen werden üblicherweise (siehe WO 01/18894 A2 oder WO 96113874A1) in einem mehrstufigen Verfahren hergestellt, wobei in der ersten Stufe das PBI in Dimethylacetamid (DMAc), welches 2% Lithiumchlorid (LiCl) enthält, gelöst und die Lösung durch Gießen oder Sprühen in die Form eines Films gebracht wird. Nach dem Trocknen des Films wird das LiCl mit Wasser aus dem Film extrahiert. Als Zwischenprodukt wird eine amorphe und flexible Polymermembran erhalten. Diese Polymermembran wird im nächsten Verfahrensschritt mit Schwefelsäure (H₂SO₄) bzw. vorzugsweise mit Phosphorsäure (H₃PO₄) dotiert. Dabei nimmt die Polymermembran ein Vielfaches ihres Eigengewichtes an Dotierungsmittel auf. Die resultierende dotierte Polymermembran ist teilkristallin, aufgrund des hohen Quellungsgrades mechanisch instabil und schwer zu handhaben. Der Kristallinitätsgrad und damit die mechanische Instabilität nimmt in Anwesenheit von Wasser, z.B. bei der Lagerung oder durch Wasser, welches bei dem Betrieb der Brennstoffzelle erzeugt wird, zu.

Ein anderer Weg zur Herstellung von mit Phosphorsäure dotierten PBI-Polymermembranen besteht darin, wie in WO 02/081547 A1 oder DE 10117686 A1 beschrieben. Lösungen aus geeigneten Monomeren bzw. Präpolymeren in polyphosphorsäure herzustellen, diese durch geeignete Verfahren in Membranform zu bringen und durch Einwirkung von Temperaturen bis zu 300°C zu polymerisieren und im Anschluß unter Einwirkung von Luftfeuchtigkeit zu hydrolysieren.

Prinzipiell weisen die bisher zur Herstellung von Brennstoffzellen eingesetzten Polymermembranen einen hohen Gehalt an Dotierungsmittel auf. Wurde Phosphorsäure eingesetzt, so betrug das Verhältnis von Säure zu Monomereinheit, aus der das Polymer zusammengesetzt ist, üblicherweise mehr als 50 Gew.% H₃PO₄ (etwa 400 Mol%) (US Patent Nr. 5 525 436, Spalte 10: 470 Mol-%, entsprechend 55 Gew.%; WO 01/18894 Spalte 6; etwa 67 Gew.%). Noch höhere Phosphorsäuregehalte, bis zu 85 Gew.% können durch die filmbildende Polymerisation in Polyphosphorsäure erreicht werden (WO 02/081547 A1 oder DE 10117686 A1). Dies führt zu stark gequollenen Polymermembranen, die Verformungen aufweisen und deren mechanische Belastbarkeit zu wünschen übrig läßt, was ihre Verwendung in einer Brennstoffzelle erschwert, insbesondere in Bezug auf den Zellbau und die Langzeitstabilität.

Zur Verbesserung der mechanischen Eigenschaften wurde in WO 00/44816 A1 vorgeschlagen, die Polymermembran aus PBI mit Hilfe eines Vernetzungsmittels zu vernetzen. Damit läßt sich die mit der Dotierung verbundene Verminderung der mechanischen Stabilität einschränken und die Verarbeitbarkeit der Polymermembran verbessern. Allerdings ist die mechanische Festigkeit für praktische Anwendung in Brennstoffzellen noch immer unzureichend, da auch bei diesen Polymermembranen ein Verhältnis von H₃PO₄ zur PBI-Wiederholungseinheit von über 6 (entsprechend etwa 65 Gew.% H₃PO₄) gewählt wurde (WO 00/44816 A1, Tabelle 2, Seite 16), um eine ausreichende Leitfähigkeit der Polymermembran sicherzustellen. Sämtliche der in der Literatur beschriebenen Testergebnisse von Membran-Elektroden-Einheiten beziehen sich daher auf die Untersuchung kleiner Zellen, bei denen die geringe mechanische Stabilität der Polymermembran nicht so stark ins Gewicht fällt und die eine aktive Fläche von weniger als 40 cm² aufweisen (WO 00/30202 A1, WO 01/18894 A2 sowie Untersuchungen in Mikrobrennstoffzellen: WO 96/13672 A1).

Membran-Elektroden-Einheiten für Polymerelektrolyt-Brennstoffzellen für den Arbeitstemperaturbereich zwischen 100 und 200 °C mit Polymerelektrolyt-Polymermembranen auf der Basis des Systems PBI-H₃PO₄ enthalten üblicherweise zwei Gasverteilungselektroden, die durch die Polymermembran separiert werden.
Die in der Literatur für diese Anwendung beschriebenen Gasverteilungselektroden sind analog aufgebaut zu Elektroden für MEEs mit Elektrolytmembranen auf der Basis von Nafion, wobei auf Nafion als Elektrodenbestandteil verzichtet wird. Die protonenleitende Anbindung zwischen Elektrode und Elektrolyt wird in der Regel durch Phosphorsäure gewährleistet. Dazu werden die Elektroden vor dem Zusammenbau der Zelle mit Phosphorsäure imprägniert (WO 01/18894 A2). US-Patent Nr. 5 599 639 geht davon aus, dass Phosphorsäure aus der Polymermembran in die Elektroden diffundiert. Bel Arbeitstemperaturen >> 100°C ist der Phosphorsäureaustrag aus der Zelle minimal. Eine zusätzliche Einschränkung des Phosphorsäureaustrages aus der Zelle kann erreicht werden, wenn, wie in WO 01/18894 A2 vorgeschlagen, PBI als polymerer Binder für die Elektroden verwendet wird, was aber auf Grund der Eigenschaft von PBI, dichte Filme zu bilden, nicht unproblematisch ist.

Aufgabe der vorliegenden Erfindung ist es, ein Verfahren zur Herstellung einer Membran-Elektroden-Einheit für Polymerelektrolyt-Brennstoffzellen und einer Polymerelektrolyt-Brennstoffzelle hoher Leistung im Arbeitstemperaturbereich oberhalb 50 °C zur Verfügung zu stellen, mit dem die oben genannten Nachteile überwunden werden, und das auf einfache Weise realisiert werden kann.

Die Aufgabe werden durch die in den unabhängigen Ansprüchen 1 und 3 definierten Verfahren gelöst. Vorteilhafte Ausgestaltungen der Erfindung sind in den Unteransprüchen definiert.

Die erfindungsgemäß hergestellte Membran-Elektroden-Einheit besteht mindestens aus zwei flächigen Gasverteilungselektroden und einer sandwichartig dazwischen angeordneten flächigen Polymermembran mit mindestens einem basischen Polymer sowie aus einem Dotierungsmittel, mit welchem die Gasverteilungselektroden derartig beladen sind, dass sie ein Dotierungsmittelreservoir für die Polymermembran darstellen. Die Polymermembran ist über das Dotierungsmittel nach Einwirkung von Druck- und Temperatur protonenleitend und fest an die Gasverteilungselektroden angebunden und weist im dotierten Zustand eine Leitfähigkeit von wenigstens 0,1 S/m bei einer Temperatur von nicht weniger als 25 °C auf. Die MEE ist für Polymerelektrolyt-Brennstoffzellen mit einer Arbeitstemperatur bis 250 °C geeignet.
Die Polymermembran umfasst ein basisches Polymer, welches durch Dotierung mit einem Dotierungsmittel protonenleitend wird und in diesem Zustand eine technisch relevante Leitfähigkeit aufweist. Das basische Polymer ist ausgewählt aus der Gruppe der Polybenzimidazole, Polypyridine, Polypyrimidine, Polyimidazole, Polybenzthiazole, Polybenzoxazole, Polyoxadiazole, Polychinoxaline, Polythiadiazole, Poly(tetrazapyrene) oder einem Copolymer oder einem Gemisch aus zwei oder mehreren Vertretern dieser Gruppe. In einer bevorzugten Ausführungsform der Erfindung ist das basische Polymer Polybenzimidazol (PBI).
Bei den Elektroden handelt es sich um poröse Gasverteilungselektroden mit einer der Polymermembran zugewandten, den Katalysator enthaltenden Schicht, welche auf eine Gasverteilungsschicht aus einer Kohlenstoffmatrix aufgebracht ist. Die Gasverteilungselektroden sind mit dem Dotierungsmittel derart beladen, dass sie ein Dotierungsmittelreservoir für die Polymermembran darstellen, welche zum Zeitpunkt des Zusammenbaues der MEE nicht dotiert zu sein braucht. Der Gehalt an Dotierungsmittel in den Gasverteilungselektroden beträgt 60 bis 120 % der Masse des basischen Polymers in der Polymermembran. In einer weiteren bevorzugten Ausführungsform der Erfindung ist das Dotierungsmittel eine starke mehrbasige anorganische Säure, wobei Phosphorsäure besonders bevorzugt ist.
Die Menge an Phosphorsäure, die von der Polymermembran aufgenommen werden kann, ist abhängig von Temperatur und Dotierungszeit, während der Prozess bei niedrigen Temperaturen sehr langsam abläuft und nur zu Dotierungsgraden von bis zu 50 Gew.% führt, können bei Temperaturen oberhalb 100°C sehr schnell große Mengen an H₃PO₄ in die Polymermembran eingetragen werden. Überraschenderweise wurde gefunden, dass für Temperaturen, bei denen die Polymerelektrolyt-Brennstoffzellen vorzugsweise betrieben werden sollen, nämlich bei Temperaturen zwischen 100 und 200°C, dass die hochporösen Gasverteilungselektroden als Reservoir für das Dotierungsmittel dienen, welches unter Betriebsbedingungen der Polymerelektrolyt-Brennstoffzellen in ausreichendem Maße Dotierungsmittel an die Polymermembran abgibt. Das hat den Vorteil, dass zum Bau der Membran-Elektroden-Einheit sogar nichtdotierte Polymermembranen verwendet werden können, die mechanisch hoch belastbar sind. Unter Betriebsbedingungen erfolgt eine Umverteilung des Dotierungsmittels aus den Gasverteilungselektroden in die Polymermembran, wodurch die Gasverteilungselektroden protonenleitend an die Polymermembran angebunden werden, und die Polymermembran erreicht Werte für die Leitfähigkeit ≥ 0,1 S/m (25°C).

Es wurde gefunden, daß die Polymermembran während der Dotierung in der MEE unter Betriebsbedingungen erweicht und so ein guter Kontakt zwischen Gasverteilungselektroden und protonenleitfähiger Polymermembran hergestellt wird. Nachfolgende Kristallisationsprozesse in der Polymermembran in Gegenwart von Dotierungsmittel stabilisieren den Gasverteilungselektroden- Polymermembran-Gasverteilungselektroden-Sandwich mechanisch und sorgen für einen festen physikalischen Zusammenhalt. Komplexbildung zwischen basischem Polymer und Dotierungsmittel, die Gasundurchlässigkeit einer intakten Polymermembran sowie Kapillarkräfte in den Gasverteilungselektroden bewirken, daß das Dotierungsmittel unter Betriebsbedingungen (T>> 100°C, p>1 bar) in der erfindungsgemäßen MEE verbleibt und durch entstehendes Produktwasser nicht aus der Zelle ausgetragen wird.

Falls der Austausch von Dotierungsmittel in der Polymerelektrolyt-Brennstoffzelle und die dadurch bedingten Quellungsvorgänge in der Polymermembran Spannungen an der Kontaktfläche Elektrode-Elektrolyt (protonenleitende Polymermembran) bewirken, die dazu führen, daß die Polymermembran reißt, kann in einer bevorzugten Ausführungsform der Erfindung zur Verhinderung eine weichgemachte Polymermembran, z.B. eine Polymermembran die Phosphorsäureester enthält, verwendet werden. Derartige weichgemachte Polymermembranen können bis zu 40 Gew. % an Weichmacher enthalten. In diesem Falle laufen die Equilibrierungsvorgänge bei Herstellung der MEE und bei Inbetriebnahme der Polymerelektrolyt-Brennstoffzelle deutlich schneller ab. Außerdem ist es vorteilhaft, die Polymermembran zu vernetzen, dadurch wird die mechanische Stabilität der Polymermembran heraufgesetzt, zudem kann der durch Quellung maximal erreichbare Dotierungsgrad der Polymermembran auf das zum Erreichen der Leitfähigkeit notwendige Maß eingeschränkt werden, was sich wiederum günstig auf die Lebensdauer der Polymerelektrolyt-Brennstoffzelle auswirkt Ein weiterer Vorteil der Erfindung besteht darin, den Gehalt an Dotierungsmittel so zu optimieren, daß nur soviel davon vorhanden ist, wie für die Anbindung von Gasverteilungselektrode und Polymermembran und für die Leitfähigkeit der Polymermembran notwendig ist, was die Lebensdauer der Polymerelektrolyt-Brennstoffzelle ebenfalls erhöht und die Effizienz der ablaufenden elektrochemischen Prozesse verbessert.

Geeignete Gasverteilungselektroden für die erfindungsgemäß hergestellte Membran-Elektroden-Einheit weisen eine Gasverteilungsschicht und eine Katalysatorschicht auf. Die porösen Gasverteilungselektroden sind für die Reaktionsgase (z.B.: Wasserstoff und Luft) durchlässig und infolge eines hohen Kohlenstoffanteils elektrisch leitfähig. Die Herstellung der Gasverteilungselektroden erfolgt bekanntermaßen in der Regel durch Herstellen einer Paste aus einer Lösung aus polymerem Binder, wie z.B. Polytetrafluorethylen, oder dem basischen Polymer der Polymermembran, Platin- und Kohlenstoffruß, wie z. B Vulcan XC 72 von der Fa. Heraeaus (BRD) und Auftragen dieser Paste auf die Gasdiffusionschicht der Gasverteilungselektrode, wie in Gottesfeld et al., J. Appl. Electrochem. 22 (1992) Seite 1-7 beschrieben. Die Gasdiffusionsschicht kann ein Vlies oder ein Gewebe aus Kohlenstofffasern sein. Gasverteilungsschicht und Katalysatorschicht bilden das Dotierungsmittelreservoir für die gesamte MEE. Elektroden mit einer Gesamtdicke zwischen 300 und 400 µm sollten zwischen 0,2 und 0,5 g Dotierungsmittel / cm³ Elektrodenvolumen aufnehmen können.

Eine Polymermembran für das erfindungsgemäße Verfahren wird durch technische Maschinenziehung einer Polymerlösung hergestellt, welche ein oder mehrere basische Polymere umfassen kann. Darunter werden Polymere verstanden, die aufgrund ihrer Basizität in der Lage sind, Dotierungsmittel, wie im folgenden definiert, zu binden. Bevorzugte basische Polymere schließen Polybenzimidazol, Polypyridin, Polypyrimidin, Polyimidazole, Polybenzdiazole, Polybenzoxazole, Polyoxadiazole, Polychinoxaline, Polythiadiazole und Poly(tetrazapyrene) oder Copolymere oder Gemische aus zwei oder mehreren der vorgenannten Vertreter ein. Besonders bevorzugt sind erfindungsgemäß basische Polymere der nachstehend angegebenen allgemeinen Formel: 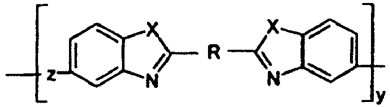 X=NH, O, S
Z=O, S. 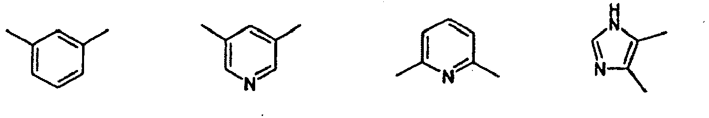 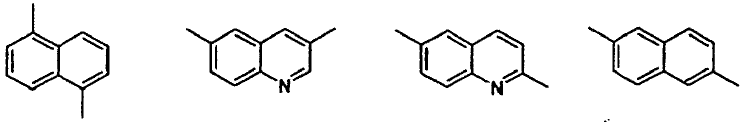 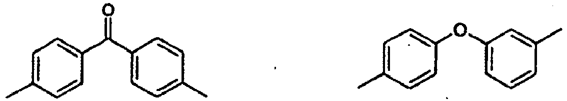 R hat bevorzugt die Bedeutung einer der oben aufgeführten Gruppen oder die einer zweiwertigen Verknüpfungsgruppe, wie eine lineare oder verzweigte, substituierte oder unsubstituierte, gegebenenfalls perfluorierte -CF₂-CF₂-Kohlenwasserstoffgruppe .
X kann eine Aminogruppe aber auch ein Sauerstoffatom oder ein Schwefelatom sein, Z ein Sauerstoff oder Schwefelatom.
Außerdem kann das basische Polymer sulfoniert oder phosphoniert sein, wie in dem US-Patent Nr. 5 599 639 beschrieben wird, wobei die Phosphonierung bevorzugt ist. Dies kann sinnvoll sein, um dem Austrag von Dotierungsmittel aus der MEE entgegenzuwirken. Das in Form eines oder mehrerer Flächengebilde vorliegende Basismaterial kann außer dem basischen Polymer oder den basischen Polymeren weitere Stoffe, wie Keramik, enthalten.

Bei dem basischen Polymer handelt es sich bevorzugt um Polybenzimidazol (PBI) der Formel (II)

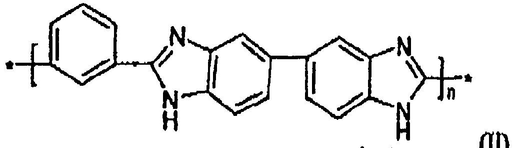

Das Dotierungsmittel für die erfindungsgemäß hergestellte MEE ist eine starke, mehrbasige, nicht oxidierbare Säure. Nicht oxidierbar bedeutet im Rahmen der Erfindung, dass unter den üblichen Temperatur- und Ionenstärkebedingungen einer Brennstoffzelle keine Oxidation durch das in die Kathode eingespeiste Oxidationsmittel (in der Regel Sauerstoff bzw. Luft) stattfindet. Außerdem soll die Säure nicht an der Anode reduziert werden. Bei dem Dotierungsmittel handelt es sich bevorzugt um eine mehrbasige Säure, insbesondere um eine anorganische Säure. Beispiele sind Phosphor(V)säure oder Schwefel(VI)säure, wobei Phosphor(V)säure bevorzugt ist. Die Verwendung dieser freien Säuren als Dotierungsmittel ist bei Betriebstemperaturen der Brennstoffzelle von mehr als 100°C bevorzugt.

Um die mechanische Stabilität der Polymermembran der MEE zu erhöhen und die Aufnahmefähigkeit der Polymermembran für das Dotierungsmittel zu begrenzen, kann es sinnvoll sein, die Polymermembran bei der Herstellung durch technische Polymermembranziehung zu vernetzen.
Die Vernetzung der Polymermembran geschieht vorzugsweise mit einem Vernetzungsmittel, welches bereits der Polymermembrangießlösung zugegeben wird. Hierfür kommen alle mindestens zwei funktionelle Gruppen aufweisenden Verbindungen in Frage, welche mit dem verwendeten Polymer bzw. Polymeren unter Ausbildung kovalenter Bindungen reagieren können. Gemäß einer bevorzugten Ausführungsform der Erfindung weist das eingesetzte Vernetzungsmittel Epoxy- und/oder Isocyanatgruppen auf, wie die in WO 00/44816 A1 beschriebenen. Bevorzugt sind dabei Verbindungen mit mindestens zwei Epoxidgruppen im Molekül. Besonders bevorzugt ist die Verwendung von 1,4-Butandioldiglycidylether (III) als Vernetzungsmittel.

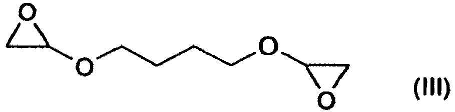

Die zur Vernetzung der Polymermembran notwendige Vernetzermenge richtet sich nach dem gewünschten Vernetzungsgrad und ist abhängig von der Molmasse des verwendeten basischen Polymeren und der Reaktionstemperatur, vorzugsweise werden der Reaktionslösung 2 bis 20 Mol% bezogen auf die Wiederholungseinheit des Polymeren zugesetzt.
In einer bevorzugten Ausführungsform werden Polymermembranen eingesetzt, die während des Schrittes der Polymermembranherstellung durch technische Maschinenziehung gleichzeitig vernetzt und weichgemacht wurden.
In diesem Fall werden Weichmacher verwendet, die ein Reaktionsprodukt einer mindestens zweibasigen, in der Regel anorganischen Säure mit einer organischen Verbindung oder das Kondensationsprodukt des vorgenannten Reaktionsproduktes mit einer mehrbasigen Säure umfassen. Es handelt sich hierbei um mehrbasige, mindestens zweibasige Säuren, die ein- oder mehrfach mit einer organischen Verbindung Ester-analog zu Estern, Säureamiden oder Säureanhydriden umgesetzt sind, wobei in der entstehenden Verbindung ein acides Proton verbleibt. Die organische Verbindung, welche mit der Säure umgesetzt wird, ist ausgewählt aus der Gruppe, umfassend lineare oder verzweigte, gegebenenfalls substituierte aliphatische Alkohole mit 5 bis 20, vorzugsweise mit 6 bis 16, mehr bevorzugt mit 7 bis 12, am meisten bevorzugt mit 8 bis 10 Kohlenstoffatomen; gegebenenfalls substituierte aromatische Alkohole; lineare oder verzweigte, gegebenenfalls substituierte aliphatische Amine mit 5 bis 20, vorzugsweise mit 6 bis 16, mehr bevorzugt mit 7 bis 12, am meisten bevorzugt mit 8 bis 10 Kohlenstoffatomen und aromatische Amine. Unter den organischen Verbindungen ist 2-Ethylhexanol und Phenol für die Umsetzung mit der Säure, vorzugsweise Phosphorsäure, besonders bevorzugt. Die Umsetzung der mindestens zweibasigen Säure mit der organischen Verbindung ist so durchzuführen, daß eine acide Gruppe, d.h. eine Hydroxylgruppe der Säure übrigbleibt. Dabei können bei einer dreibasigen Säure, wie Phosphorsäure, zwei acide OH-Gruppen mit einer bifunktionalen organischen Verbindung, beispielsweise einem Diol verbrückt, d.h. unter Ausbildung eines Ringes beispielsweise verestert sein.
Gemäß einer bevorzugten Ausführungsform des Verfahrens wird als Weichmacher ein Reaktionsprodukt einer mindestens zweibasigen Säure mit einer organischen Verbindung eingesetzt. Unter den geeigneten Verbindungen sind Phosphorsäurediester, wie Di-(2-ethylhexyl)phosphorsäureester und Diphenylphosphorsäureester, bevorzugt, wobei Di-(2-ethylhexyl)phosphorsäureester besonders bevorzugt ist.
Vernetzung und Welchmachung können als Steuerparameter benutzt werden, um die Verteilung des Dotierungsmittels in der Membran-Elektroden-Einheit zu beeinflussen, zum Beispiel, um die Aufnahmefähigkeit der Polymermembran für das Dotierungsmittel zu begrenzen, aber gleichzeitig einen schnellen Austausch von Dotierungsmittel zwischen Elektrode und Polymermembran zu ermöglichen. Einfluß auf diese Parameter haben aber auch die Betriebstemperatur, die Polymermembrandicke, vorzugsweise im Bereich 20 bis 70 µm und die Konzentration des zur Elektrodenimprägnierung eingesetzten Dotierungsmittels (vorzugsweise Phosphorsäure).

Die Erfindung betrifft weiterhin ein Verfahren zur Herstellung einer Membran-Elektroden-Einheit (MEE) aus zwei flächigen Gasverteilungselektroden und einer sandwichartig dazwischen angeordneten Polymermembran mit mindestens einem basischen Polymer sowie einem Dotierungsmittel mit den Schritten:
A Imprägnieren der flächigen Gasverteilungselektroden mit einem Dotierungsmittel bis zu einem Gehalt an Dotierungsmittel von 60 bis 120 % der Masse des basischen Polymers in der polymermembran,
B sandwichartiges Anordnen der Polymermembran zwischen den imprägnierten Gasverteilungselektroden,
C Anordnen des Sandwiches aus Schritt B zwischen zwei Pressplatten
D Heißpressen der Anordnung bei einer Temperatur zwischen 100°C und 250°C und einem Druck zwischen 1 und 5 bar über einen Zeitraum von 5 Sekunden bis 60 Minuten.

Die Schritte A bis D werden bei einem kontinuierlichen oder diskontinuierlichen Prozeß durchgeführt.
Die Menge an Dotierungsmittel, mit dem die Gasverteilungselektrode(n) imprägniert werden, wird bevorzugt so gewählt, daß nach Erreichen des Stofftränsportgleichgewichts für den Austausch von Dotierungsmittel zwischen Gasverteilungselektrode(n) und Polymermembran, in der Polymermembran eine Leitfähigkeit von mindestens 0,1 S/m (25°C) erreicht wird.
Die Betriebstemperatur liegt zwischen 50°C und 250°C, bevorzugt zwischen 100°C und 250°C. besonders bevorzugt zwischen 150°C und 200°C bzw. ganz besonders bevorzugt zwischen 150°C und 170°C. Die Betriebstemperatur kann aber auch zum Beispiel 50 bis 100°C betragen. Zur Inbetriebnahme der Polymerelektrolyt-Brennstoffzelle muß Dotierungsmittel aus den Gasverteilungselektroden in die Polymermembran übergegangen sein. Dies geschieht vorzugsweise während einer sogenannten Konditionierungsphase durch Heißpressen, bei der die Membran-Elektroden-Einheit bei erhöhter Temperatur und vorzugsweise Spülen mit Stickstoff zusammengepresst wird.

Erfindungsgemäß wird die Herstellung der Polymerelektrolyt-Brennstoffzelle für eine Arbeitstemperatur bis 250 °C mit einer Membran-Elektroden-Einheit aus zwei flächigen Gasverteilungselektroden und einer sandwichartig dazwischen angeordneten Polymermembran mit mindestens einem basischen Polymer sowie einem Dotierungsmittel mit den folgenden Schritten durchgeführt:
A Imprägnieren der Gasverteilungselektroden mit einem Dotierungsmittel bis zu einem Gehalt an Dotierungsmittel von 60 bis 120 % der Masse des basischen Polymers, so dass diese ein Dotierungsmittelreservoir für die Polymermembran darstellen,
B sandwichartiges Anordnen der Polymermembran zwischen die dotierten Gasverteilungselektroden,
C Anordnen des Sandwiches aus Schritt B zwischen zwei Bipolarplatten einer Polymerelektrolyt-Brennstoffzelle,
D Ausüben eines Anpressdruckes auf den Polymermembran-Elektroden-Sandwich in der Polymerelektrolyt-Brennstoffzelle bei einer Temperatur zwischen 50°C und 250°C und Beaufschlagen der Brennstoffzelle mit reaktiven Gasen über einen Zeitraum zwischen 1 Minute und 10 Stunden, bevorzugt zwischen 1 und 60 Minuten, so dass die Polymermembran über das Dotierungsmittel protonenleitend und fest an die Gasverteilungselektroden angebunden ist und im dotierten Zustand eine Leitfähigkeit von wenigstens 0,1 S/m bei einer Temperatur von nicht weniger als 25 °C aufweist.

In einer bevorzugten Ausführungsform der Erfindung werden als reaktive Gase Wasserstoff und Luft verwendet, wodurch die Polymerelektrolytmembran-Brennstoffzelle in Betrieb genommen wird.
Dabei erfolgt in der ersten Phase der Inbetriebnahme der Polymerelektrolyt-Brennstoffzelle eine Umverteilung des Dotierungsmittels zwischen den imprägnierten Gasverteilungselektroden und der Polymermembran, wodurch die Leitfähigkeit der Polymermembran auf Werte größer 0,1 S/m bei Temperaturen von wenigstens 25 °C steigt. Gleichzeitig wird dabei eine protonenleitende Anbindung der Gasverteilungselektroden an die Polymermembran realisiert.

Die Erfindung wird nun anhand der nachfolgenden Beispiele und der Figuren 1 bis 2 näher erläutert, welche die Erfindung aber in keiner Weise einschränken.
- Fig. 1: zeigt eine Polarisationskurve als Funktion der Spannung und der Stromdichte für eine nach Beispiel 46 hergestellte MEE und
- Fig. 2: zeigt eine Polarisationskurve als Funktion der Spannung und der Stromdichte für eine nach Beispiel 8 hergestellte MEE.

### Beispiel 1

### Herstellen einer Polymergießlösung

216 g PBI mit einer inhärenten Viskosität von 0,86 dl/g werden in 684 g DMAc durch dreistündiges Rühren im Druckreaktor bei 200°c aufgelöst. Die Lösung wird abgekühlt und über eine Sartopure® PP2(P9) Filtercapsule mit einer Porengröße von 20 µm der Sartorius AG, Göttingen, filtriert und entgast. Die Lösung besitzt einen Feststoffgehalt von 24%.

### Beispiel 2

### Herstellen einer Polymermembran

Aus der Lösung entsprechend Beispiel 1 wird durch technische Maschinenziehung auf einer als Unterlage dienenden Polyesterfolie durch Verdunsten des Lösungsmittels bei 150°C eine Polymermembran von 40 µm Dicke hergestellt und von der Unterlage abgelöst. Zur vollständigen Entfernung des Lösungsmittels wird die Polymermembran anschließend bei einer Temperatur von 200°C 4 h nachgetrocknet.

### Beispiel 3

### Herstellen einer Membran-Elektroden-Einheit

Zur Herstellung einer Membran-Elektroden-Einheit (MEE) wird eine in Beispiel 2 hergestellte Polymermembran in ca. 104 cm² große quadratische Stücke geschnitten. Kommerziell erhältliche ELAT-Elektroden mit 2,0 mg/cm² Pt-Belegung und einer Fläche von 50 cm² der Firma E-TEK werden im Vakuum mit konzentrierter Phosphorsäure bei Raumtemperatur imprägniert, so dass die Elektroden nach Trocknung bei 100°C mindestens 0,25 g H₃PO₄/cm³ Elektrodenvolumen enthalten und anschließend mit der erfindungsgemäßen Polymermembran in einer üblichen Anordnung in eine Testbrennstoffzelle der Firma Fuel Cell Technologies. Inc. eingebaut. Die Zelle wird mit einem Anpressdruck von 2 MPa verschlossen und im Anschluß daran bei 160°C unter Spülen mit Stickstoff 16 h konditioniert und dann abgekühlt.

### Beispiel 4

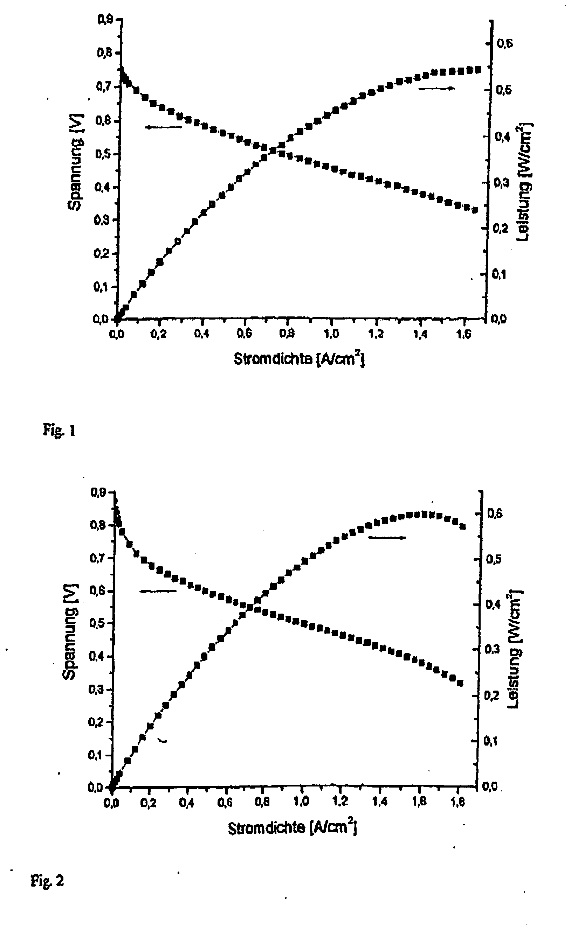

Bestimmen der Leistungsparameter der Membran-Elektroden-Einheit nach Beispiel 3 Die Zelle gemäß Beispiel 3 wird an einen handelsüblichen Brennstoffzellenteststand FCATS Advanced Screener der Firma Hydrogenics Inc. angeschlossen und in den Betriebszustand versetzt: T = 160°C, Gasdruck für Wasserstoff und Luft p = 3bar, Stöchiometrie für Luft von 2 und für Wasserstoff von 1,5. Unter diesen Bedingungen hat die Zelle eine Impedanz von ca. 10 mΩ, gemessen mit einem Impedanzspektrometer IM6 der Firma Zahner-elektrik GmbH & Co. KG. Abbildung 1 zeigt die Polarisationskurve als Funktion der Spannung und der Stromstärke. Die niedrige Ruhespannung kennzeichnet den Übergang von Wasserstoff auf die Kathodenseite bedingt durch einen Spannungsriß in der Polymermembran.

### Beispiel 5

Herstellen einer Polymergießlösung enthaltend Vernetzer und Dotierungsmittel. 180 g PBI mit einer inhärenten Viskosität von 0,86 dl/g werden in 720 g DMAc durch 3h Rühren im Druckreaktor bei 200°C aufgelöst. Die Lösung wird abgekühlt und über eine Sartopure® PP2(P9) Filtercapsule mit einer Porengröße von 20 µm (Sartorius AG, Göltingen) filtriert. Die Lösung besitzt einen Feststoffgehalt von 20%.
Diese Lösung wird unter kräftigem Rühren mit 4 Gew.% 1,4-Butandioldiglycidylether, bezogen auf die Polymermenge, versetzt. Nach ca. 10 min werden 20 Gew.% Di-(2-ethylhexyl)-phosphat, bezogen auf die Polymermenge, langsam zugetropft. Die Lösung wird auf 100°C erwärmt und eine Stunde weiter gerührt, danach abgekühlt und entgast.

### Beispiel 6

### Herstellen einer Polymermembran

Aus der Lösung entsprechend Beispiel 5 wird durch technische Maschinenziehung auf einer als Unterlage dienenden Polyesterfolie durch Verdunsten des Lösungsmittels bei 150°C eine Polymermembran von 44 µm Dicke hergestellt und von der Unterlage abgelöst. Zur vollständigen Entfernung des Lösungsmittels wird die Polymermembran abschließend bei einer Temperatur von 200°C 4 h nachgetrocknet.

### Beispiel 7

### Herstellen einer Membran-Elektroden-Einheit

Zur Herstellung einer Membran-Elektroden-Einheit (MEE) wird eine in Beispiel 6 hergestellte Polymermembran in ca. 104 cm² große quadratische Stücke geschnitten. Kommerziell erhältliche ELAT-Elektroden mit 2,0 mg/cm² Pt-Belegung und einer Fläche von 50 cm² der Firma E-TEK werden im Vakuum mit konzentrierter Phosphorsäure bei Raumtemperatur imprägniert, so dass die Elektroden nach Trocknung bei 100°C mindestens 0,25 g H₃PO₂/cm³ Elektrodenvolumen enthalten und anschließend mit der erfindungsgemäßen Polymermembran in einer üblichen Anordnung in eine Testbrennstoffzelle der Firma Fuel Cell Technologies, Inc. eingebaut. Die Zelle wird mit einem Anpressdruck von 2 MPa verschlossen und im Anschluß daran bei 160°C unter Spülen mit Stickstoff 16 h konditioniert und dann abgekühlt.

### Beispiel 8

### Bestimmen der Leistungsparameter der Membran-Elektroden-Einheit nach Beispiel 7

Die Zelle gemäß Beispiel 7 wird an einen handelsüblichen Brennstoffzellenteststand FCATS Advanced Screener der Firma Hydrogenics Inc. angeschlossen und in den Betriebszustand versetzt: T = 160°C, Gasdruck für Wasserstoff und Luft p = 3bar, Stöchiometrie für Luft von 2 und für Wasserstoff von 1,5. Unter diesen Bedingungen hat die Zelle eine Impedanz von ca. 10 mΩ, gemessen mit einem Impedanzspektrometer IM6 der Firma Zahner-elektrik GmbH & Co. KG. Abbildung 2 zeigt die Polarisationskurve als Funktion der Spannung und der Stromstärke. Mittels Wasserstoffmessung durch einen entsprechenden Sensor der Firma Dräger konnte kein Wasserstoff auf der Kathodenseite festgestellt werden.

## Patentansprüche

1. Verfahren zur Herstellung einer Membran-Elektroden-Einheit aus zwei flächigen Gasverteilungselektroden und einer sandwichartig dazwischen angeordneten Polymermembran mit mindestens einem basischen Polymer sowie einem Dotierungsmittel für Polymerelektrolyt-Brennstoffzellen mit einer Arbeitstemperatur bis 250 °C mit den Schritten:
A Imprägnieren der Gasverteilungselektroden mit einem Dotierungsmittel bis zu einem Gehalt an Dotierungsmittel von 60 bis 120 % der Masse des basischen Polymers in der Polymermembran,
B sandwichartiges Anordnen der Polymermembran zwischen den imprägnierten Gasverteilungselektroden,
C Anordnen des Sandwiches zwischen zwei Pressplatten
D Heißpressen der Anordnung bei einer Temperatur zwischen 50 °C und 250 °C und einem Druck von mehr als 1 bar über einen Zeitraum von 5 Sekunden bis 60 Minuten.

2. Verfahren zur Herstellung einer Membran-Elektroden-Einheit nach Anspruch 1 wobei die Schritte A bis D in einem kontinuierlichen Prozess durchgeführt werden.

3. Verfahren zur Herstellung einer Polymerelektrolyt-Brennstoffzelle für eine Arbeitstemperatur bis 250 °C mit einer Membran-Elektroden-Einheit aus zwei flächigen Gasverteilungselektroden und einer sandwichartig dazwischen angeordneten Polymermembran mit mindestens einem basischen Polymer sowie einem Dotierungsmittel mit den Schritten:
A Imprägnieren der Gasverteilungselektroden mit einem Dotierungsmittel bis zu einem Gehalt an Dotierungsmittel von 60 bis 120 % der Masse des basischen Polymers, so dass diese ein Dotierungsmittelreservoir für die Polymermembran darstellen,
B sandwichartiges Anordnen der Polymermembran zwischen die dotierten Gasverteilungselektroden,
C Anordnen des Sandwiches aus Schritt B zwischen zwei Bipolarplatten einer Polymerelektrolyt-Brennstoffzelle,
D Ausüben eines Anpressdruckes auf den Polymermembran-Elektroden-Sandwich in der Brennstoffzelle bei einer Temperatur zwischen 50 °C und 250 °C und Beaufschlagen der Brennstoffzelle mit reaktiven Gasen über einen Zeitraum zwischen 1 Minute und 10 Stunden, so dass die Polymermembran über das Dotierungsmittel protonenleitend und fest an die Gasverteilungselektroden angebunden ist und im dotierten Zustand eine Leitfähigkeit von wenigstens 0,1 S/m bei einer Temperatur von nicht weniger als 25 °C aufweist.

4. Verfahren zur Herstellung einer Polymerelektrolyt-Brennstoffzelle nach Anspruch 3, wobei als reaktive Gase Wasserstoff und Luft verwendet werden.

## Claims

1. Method of producing a membrane-electrode unit of two areal gas distribution electrodes and a polymer membrane, which is arranged in sandwich-like manner therebetween, with at least one basic polymer as well as a doping means, for polymer-electrolyte fuel cells with a working temperature up to 250° C, comprising the steps:
A impregnating the gas distribution electrodes with a doping means up to a content of doping means of 60 to 120% of the mass of the basic polymer in the polymer membrane,
B arranging the polymer membrane in sandwich-like manner between the impregnated gas distribution electrodes,
C arranging the sandwich between two press plates and
D hot-pressing the arrangement at a temperature between 50° C and 250° C and a pressure of more than 1 bar over a time period of 5 seconds to 60 minutes.

2. Method of producing a membrane-electrode unit according to claim 1, wherein the steps A to D are carried out in a continuous process.

3. Method of producing a polymer-electrolyte fuel cell for a working temperature up to 250° C with a membrane-electrode unit from two areal gas distribution electrodes and a polymer membrane, which is arranged in sandwich-like manner therebetween, with at least one basic polymer as well as a doping means, comprising the steps:
A impregnating the gas distribution electrodes with a doping means up to a content of doping means of 60 to 120% of the mass of the basic polymer, so that they represent a doping means reservoir for the polymer membrane,
B arranging the polymer membrane in sandwich-like manner between the doped gas distribution electrodes,
C arranging the sandwich of step B between two bipolar plates of a polymer-electrolyte fuel cell and
D exerting a pressing pressure on the sandwich of polymer membrane and electrodes in the fuel cell at a temperature between 50° C and 250° C and acting on the fuel cell with reactive gases over a time period between 1 minute and 10 hours, so that the polymer membrane is connected in a proton-conductive manner and fixedly with the gas distribution electrodes by way of the doping means and in the doped state has a conductivity of at least 0.1 S/m at a temperature of not less than 25° C.

4. Method of producing a polymer electrolyte fuel cell according to claim 3, wherein hydrogen and air are used as reactive gases.

## Revendications

1. Procédé de fabrication d'un module d'électrodes à membrane composé de deux électrodes à diffusion gazeuse planes et d'une membrane en polymère prise en sandwich entre celles-ci avec au moins un polymère basique ainsi qu'un agent de dopage pour des piles à combustible à électrolyte polymère avec une température de service allant jusqu'à 250°C, comprenant les étapes consistant à :
A) imprégner les électrodes à diffusion gazeuse avec un agent dopant jusqu'à obtenir une teneur en agent dopant allant de 60 à 120% de la masse du polymère basique dans la membrane polymère,
B) disposer la membrane en polymère en sandwich entre les électrodes à diffusion gazeuse imprégnées,
C) disposer le sandwich entre deux plateaux de presse,
D) comprimer l'ensemble à chaud à une température dans la plage de 50°C et 250°C et sous pression supérieure à 1 bar pendant une durée de 5 secondes à 60 minutes.

2. Procédé de fabrication d'un module d'électrodes à membrane selon la revendication 1, les étapes A à D étant exécutées dans un processus continu.

3. Procédé de fabrication d'un module d'électrodes à membrane pour une température de service allant jusqu'à 250°C avec un module d'électrodes à membrane composé de deux électrodes à diffusion gazeuse planes et d'une membrane en polymère prise en sandwich entre celles-ci avec au moins un polymère basique ainsi qu'un agent de dopage, comprenant les étapes consistant à :
A) imprégner les électrodes à diffusion gazeuse avec un agent dopant jusqu'à obtenir une teneur en agent dopant allant de 60 à 120% de la masse du polymère basique de sorte que celles-ci représentent un réservoir d'agent dopant pour la membrane en polymère,
B) disposer la membrane en polymère en sandwich entre les électrodes à diffusion gazeuse dopées,
C) disposer le sandwich de l'étape B entre deux plaques bipolaires d'une pile à combustible à électrolyte polymère,
D) exercer une pression de pressage sur le sandwich d'électrodes à membrane en polymère dans la pile à combustible à une température se situant dans une plage de 50°C à 250°C et charger la pile à combustible avec des gaz réactifs pendant une durée se situant entre 1 minutes et 10 heures, de telle sorte que la membrane en polymère soit reliée par l'intermédiaire de l'agent dopant fixement et de manière conductrice pour les protons aux électrodes à diffusion gazeuse et présentant à l'état dopé une conductivité au moins égale à 0,1 S/m à une température non inférieure à 25°C.

4. Procédé de fabrication d'une pile à combustible à électrolyte polymère selon la revendication 3, dans lequel les gaz réactifs utilisés sont l'hydrogène et l'air.
